# EUROPÄISCHE PATENTSCHRIFT

(11) **EP 2 562 369 B1**
(45) Veröffentlichungstag und Bekanntmachung des Hinweises auf die Patenterteilung: **14.01.2015**
(21) Anmeldenummer: 12180664.0
(22) Anmeldetag: 16.08.2012
(51) Int. Cl.: F01D 25/12, F02C 6/08, F01D 15/12

(54) **Verfahren zum Betrieb einer Gasturbinenanlage sowie Gasturbinenanlage zur Durchführung des Verfahrens**
Method for operating a gas turbine plant and gas turbine plant for implementing the method
Méthode pour opérer une turbine à gaz et turbine à gaz pour exécuter la méthode

(30) Priorität: 22.08.2011 EP 11178309
(43) Veröffentlichungstag der Anmeldung: 27.02.2013
(73) Patentinhaber: ALSTOM Technology Ltd, 5400 Baden (CH)
(72) Erfinder: Arias Chao, Manuel, 8002 Zürich (CH); Wippel, Bernhard, 5430 Wettingen (CH); Balmer, Christian, 5430 Wettingen (CH); Jakoby, Ralf, 5243 Mülligen (CH)

(56) Entgegenhaltungen:
- DE-A1-102009 003 408
- JP-A- 5 044 494
- JP-A- 7 054 669
- US-A- 4 167 096
- US-A1- 2010 154 434
- US-A1- 2010 175 387
- US-B1- 6 523 346

## Beschreibung

### TECHNISCHES GEBIET

Die vorliegende Erfindung bezieht sich auf das Gebiet der Gasturbinen. Sie betrifft ein Verfahren zum Betrieb einer Gasturbine bei welchem verdichtete Luft aus dem Verdichter entnommen wird und als Kühlluftstrom zur Kühlung thermisch belasteter Bauteile verwendet wird sowie eine Gasturbinenanlage zur Durchführung des Verfahrens.

### STAND DER TECHNIK

Gasturbinen (Gasturbinenanlagen) verwenden zur Kühlung der heissen Teile, besonders der Brennkammer und der vom Heissgas durchströmten Turbine typischerweise Kühlfluide, die dem Verdichter (Kompressor) bei passendem Druck entnommen, manchmal rückgekühlt werden, und nach erfolgter Kühlung der heissen Teile der Turbinenströmung beigegeben werden. Herkömmlich erfolgt dabei die Kühlung der thermisch hochbelasteten Komponenten einer Gasturbine nach einem starren Schema. Im einfachsten Fall bleibt der Kühlluftanteil über weite Betriebsbereiche weitgehend konstant. Dies auch dann, wenn eine Maschine beispielsweise im Teillastbetrieb mit reduzierten Heissgastemperaturen betrieben wird.

Um die Kühlluftmenge entsprechend den realen Gegebenheiten und den Betriebsbedingungen zu variieren und zu regeln schlägt die EP 1028230 vor, mittels einer variablen Kühlluftversorgung eine Regelung der Material temperatur der gekühlten Komponenten zu realisieren. Dafür wurde vorgeschlagen thermisch belastete Bauteile mit Thermoelementen oder anderen Vorrichtungen zur Temperaturmessung auszugestatten. Wenn die gemessene Temperatur einen vorgegebenen Sollwert überschreitet, wird die Kühlluftmenge erhöht. Umgekehrt wird die Kühlluft weiter angedrosselt, wenn die gemessene Materialtemperatur den vorgegebenen Sollwert unterschreitet.

Eine andere Problematik behandelt die US 6,615,574: Um eine flexible Versorgung mit passendem Einspeisedruck zu realisieren, wird vorgeschlagen die Druckluft aus verschiedenen Stufen des Verdichters abzuzweigen und geregelt so zu mischen, dass die zur Kühlung benötigte Kühlluftmenge mit einem ausreichenden Einspeisedruck zur Verfügung gestellt wird.

Aus der EP1967717 ist weiter die Nutzung eines regelbaren Sekundärluftsystems zur Erhöhung der Heissgastemperatur im Teillastbetrieb bekannt.

Aus der US2010/176387 ist weiter eine Gasturbinenanlage mit einer Abzweigleitung aus einer Brennkammerummantelung, die zu einer Vielzahl von Turbinenstufen führt, bekannt. Durch diese Abzweigleitung kann bei einer unter Volllast liegenden Last Abzweigluft vom Verdichter um die Brennkammer herum in die Turbine geführt werden.

Aus dem Stand der Technik sind somit spezifische Anpassungen der Kühlluftströme zum Betrieb nach einem vorgegebenen Betriebskonzept bekannt. Diese sind jedoch wenig flexible und erlauben keine Änderung des Betriebskonzeptes in Abhängigkeit von Betriebszielen.

### DARSTELLUNG DER ERFINDUNG

Es ist daher Aufgabe der Erfindung, ein Betriebskonzept für eine Gasturbinenanlage sowie eine Gasturbinenanlage zur Durchführung des Verfahrens anzugeben, welche die Nachteile bekannter Verfahren bzw. Gasturbinenanlagen vermeidet und insbesondere durch eine flexible Anpassung des Kühlluftsystems einen den Betriebszielen angepassten Betrieb der Gasturbine zu ermöglichen.
Ein Aspekt der Erfindung besteht darin, einen Kühlluftmassenstrom zum Erreichen spezifischer Betriebsziele mit einem Regelorgan abhängig von dem Betriebsziel zu regeln.

Dazu wird in einem Verfahren zum Betrieb einer Gasturbinenanlage, die einen Verdichter, welcher eingangsseitig Ansaugluft ansaugt und zu ausgangsseitig zur Verfügung stehender Verdichterendluft verdichtet, eine Brennkammer, in welcher unter Verwendung der Verdichterendluft ein Brennstoff unter Bildung von Heissgas verbrannt wird, sowie eine Turbine, in welcher das Heissgas unter Arbeitsleistung entspannt wird, umfasst, Verdichterendluft aus dem Verdichter entnommen und geregelt als Kühlluftstrom zur Kühlung thermisch belasteter Bauteile in die Brennkammer und/oder die Turbine geleitet. Das Verfahren zeichnet sich dadurch aus, dass die Regelung des Kühlluftstroms nicht nach einem festen Schema erfolgt, sondern der Kühlluftstrom zum Erreichen spezifischer Betriebsziele mit einem Regelorgan abhängig von dem Betriebsziel geregelt wird.

Weiter erlaubt eine Ausführung in der Regelung der Gasturbinenanlage verschiedene Betriebsziele anzuwählen. Typischerweise sind zwei oder mehr Sätze von Zielgrössen für die Regelung im Regler abgelegt und anwählbar.

Betriebsziele, für die die Regelung der Kühlluftströme angepasst wird, umfassen einen lebensdauererhöhten Betrieb, einen emissionsarmen tiefen Teillastbetrieb mit erhöhtem Kühlluftstrom, um die Heissgastemperatur bei tiefer Mischtemperatur zu erhöhen, einen Betrieb mit geregeltem oder limitiertem Verdichterenddruck, ein Betrieb in einem Kombikraftwerk mit Abhitzekessel bei dem die Turbinenaustrittstemperatur, für gute Eintrittbedingungen in einen Abhitzekessel tiefer Teillast hoch gehalten wird und ein Teillastbetrieb mit geregelter Turbinenaustrittstemperatur.

Beispielsweise wird in einer Ausführungsform des Verfahrens zur Erhöhung der Lebensdauer relativ zu einem Standardbetriebskonzept die Turbineneintrittstemperatur TIT oder Heissgastemperatur in der Brennkammer reduziert und gleichzeitig mindestens ein Kühlluftstrom erhöht. Diese Kombination hat zwei Vorteile: Zum einen wird die Kühlung, und damit Lebensdauer durch Erhöhung des Kühlluftstroms erhöht, zum anderen kann eine zu starke Reduktion der Heissgastemperatur, wie sie ohne die Änderung der Kühlluftstrommenge zur Erzielung der gleichen Lebensdauersteigerung nötig wäre, vermieden werden. Durch den erhöhten Kühlluftstrom wird der Turbineneintrittsmassenstrom reduziert. Dies führt zu einem reduzierten Druckverhältnis über die Turbine und damit auch zu einem reduzierten Temperaturverhältnis. Die resultierende Absenkung der Abgastemperatur wird durch diese Kombination gegenüber einer einfachen Reduktion der Heissgastemperatur reduziert. Dies minimiert die Einbussen auf Seiten eines nachgeschalteten Abhitzekessels und erlaubt weiterhin einen Betrieb mit hohem Gesamtwirkungsgrad.

Als Turbineneintrittstemperatur kann beispielsweise die sogenannte Mischtemperatur nach ISO 2314 (1989), die eine fiktive Temperatur beschreibt, die man bei der Mischung der Heissgase mit allen in der Brennkammer und Turbine zugeführten Massenströmen vor der Expansion erhalten würde, oder die Rotoreintrittstemperatur nach ANSI B133.1/1978, oder die "Rated Firing Temperature" nach API 616/1992 genutzt werden.

Gemäss einer weiteren Ausführung des Verfahrens zur Erhöhung der Lebensdauer wird relativ zu einem Standardbetriebskonzept die TIT in der Brennkammer reduziert, gleichzeitig mindestens ein Hochdruckkühlluftstrom erhöht und ein Niederdruckkühlluftstrom unverändert gehalten oder reduziert. Diese spezielle Ausführung vermeidet unnötigen Kühlluftverbrauch in den hinteren Stufen der Turbine. Durch die TIT-Reduktion und erhöhte Kühllufteinspeisung im Hochdrucksystem ist die Heissgastemperatur im Bereich der mit Niederdruckkühlluft gekühlten Komponenten bereits so weit abgesenkt, das eine zusätzliche Kühlung praktisch zu keiner Lebensdauererhöhung führt. Im Gegenteil kann eine Reduktion des Niederdruckkühlluftmassenstroms ohne Lebensdauereinbusse realisiert werden. Die abgedrosselte Kühlluft bleibt im Hauptstrom, wird in der Brennkammer auf die reduzierte Heissgastemperatur erhitzt und kann so Arbeit leisten und erhöht damit Leistung und Wirkungsgrad.

In einer weiteren Ausführung des Verfahrens wird ein Kühlluftstrom als Funktion des Verdichteraustrittsdrucks geregelt. Insbesondere steigt bei tiefen Temperaturen der Verdichteransaugmassenstrom und damit der Verdichterenddruck. Als tiefe Temperaturen werden beispielsweise Umgebungstemperaturen unter minus 15°C angesehen. Je nach optimierungsziel kann eine Gasturbine aber so Ausgelegt sein, dass als Tiefe Temperaturen bereits Temperaturen unter 0°C oder Temperaturen bei denen eine Vereisungsgefahr des Verdichters besteht, angesehen werden, d.h. typischerweise unter etwa 7°C. Der Verdichterenddruck kann dabei über den Auslegungsdruck der Gasturbine, insbesondere den Auslegungsdruck von Gehäuse oder von Kühlluftkühlern steigen. Um eine Aufwendige und teure Auslegung auf extrem hohe Drücke zu vermeiden oder eine Druckreduktion durch Teillastbetrieb nach einem herkömmlichen Betriebskonzept, d.h. TIT- Reduktion und schliessen von Verdichterleitschaufeln, zu vermeiden, wird gemäss der vorgeschlagenen Ausführung des Verfahrens die Kühlluft ab einem Grenzwert des Verdichterenddrucks erhöht, um den Verdichterenddruck zu reduzieren. Insbesondere wird der Verdichterenddruck durch Regelung mindestens eines Kühlluftstroms auf dem Grenzwert gehalten.

Gemäss einer weiteren Ausführung des Verfahren nach einem der Ansprüche wird bei tiefer Teillast ein Kühlluftmassenstrom in Abhängigkeit von der Turbinenaustrittstemperatur (TAT) geregelt, um die TAT auf einem hohen Niveau zu halten.

Ausgehend von Volllast wird Teillast einer Gasturbine herkömmlich dadurch erreicht, dass zunächst die TIT auf ein Teillastwertlimit reduziert wird. Anschliessend werden die mindestens eine verstellbare Verdichterleitreihe geschlossen. Mit dem Schliessen der verstellbaren Verdichterleitreihe fällt der Massenstrom und damit das Druckverhältnis über die Turbine. Dies führt zunächst zu einer Erhöhung der TAT. Sobald diese einen Teillastlimitwert erreicht hat, wird die TIT reduziert. Die Öffnung der verstellbaren Verdichterleitreihen und Heissgastemperaturen werden dann weiter reduziert, bis die verstellbare Verdichterleitreihe auf einen Teillastlimitwert geschlossen ist. Eine weitere Lastreduktion wird herkömmlich alleine durch eine weitere Reduktion der Heissgastemperatur realisiert, was unmittelbar zu einer Reduktion der TAT führt. Um einen guten Gesamtwirkungsgrad in einem Kraftwerk mit nachgeschaltetem Abhitzekessel realisieren zu können, muss die TAT auf einem Mindestwert gehalten werden. Dieser Mindestwert wird bei sehr tiefer Teillast nach herkömmlichem Fahrkonzept unterschritten, so dass ein wirtschaftlicher Betrieb kaum möglich ist. Typischerweise liegt der tiefe Teillastbetrieb unterhalb von 40% relativer Last, d.h. auf die Vollastleistung bezogener Last. Je nach Design kann herkömmlich der tiefe Teillastbereich unter 25% relativer Last liegen. Als herkömmliches Fahrkonzept wird dabei ein Fahrkonzept bezeichnet, bei dem die Massenströme im Kühlluftsystem nicht geregelt werden. Die Leistung wird ausgehend von Volllast durch Schliessen der Verdichterleitschaufeln und Reduktion der Heissgastemperatur reduziert. Im hohen Lastbereich wird die Heissgastemperatur typischerweise von einem Vollastwert auf einen Teillastwert reduziert (optional). Dann werden die Verdichterleitschaufeln geschlossen bis ein TAT-Limit erreicht wird. Sobald dies erreicht ist, wird die Heissgastemperatur parallel zum Schliessen der Verdichterleitschaufeln reduziert und so geregelt, dass die TAT am TAT-Limit bleibt. Sobald die Verdichterleitschaufeln eine geschlossen Position (Minimalposition für den Lastbetrieb) erreicht haben, wird die Last nur noch über die Heissgastemperatur geregelt. Eine Heissgastemperaturreduktion führt so unmittelbar zu einer Reduktion der TAT und herkömmlich damit schnell zu einer tiefen TAT und den oben beschrieben Problemen für einen Nachgeschalteten Wasser-Dampfprozess. Das Auflasten erfolgt in der umgekehrten Reihenfolge.

Die vorgeschlagene Ausführung des Verfahrens erlaubt die TAT durch eine Reduktion des Kühlluftverbrauchs zu erhöhen. Insbesondere eine Regelung des Mitteldruckkühlluftstroms und/oder ein Niederdruckkühlluftstrom führt bei tiefer Teillast ohne Lebensdauereinbusse unmittelbar zu einer TAT Anhebung. Da die Heissgastemperatur und TAT bereits stark abgesenkt sind, ist eine Kühlung praktisch nicht erforderlich. Ein Mitteldruckkühlluftstrom und/oder ein Niederdruckkühlluftstrom können stark gedrosselt werden. Ein Niederdruckkühlluftstrom kann im extrem sogar ganz abgestellt werden. Typischerweise wird aber ein Mindeststrom zur Spülung, und um Rückströmungen zu vermeiden, aufrechterhalten.

Neben dem Verfahren ist eine Gasturbinenanlage, die zur Durchführung des Verfahrens geeignet ist, Gegenstand der Erfindung. Eine derartige Gasturbinenanlage umfasst mindestens einen Verdichter, welcher eingangsseitig Ansaugluft ansaugt und zu ausgangsseitig zur Verfügung stehender Verdichterendluft verdichtet, mindestens eine Brennkammer, in welcher unter Verwendung der Verdichterendluft ein Brennstoff unter Bildung von Heissgas verbrannt wird, sowie mindestens eine Turbine, in welcher das Heissgas unter Arbeitsleistung entspannt wird. Zur Kühlung von thermisch belasteten Bauteilen der Brennkammer und/oder der Turbine sind erste Kühlleitungen von einer Entnahmestelle des Verdichters und/oder dem Ausgang des Verdichters zu den thermisch belasteten Bauteilen vorgesehen. Weiter umfasst die erfindungsgemässe Gasturbine in den ersten Kühlleitungen von der Verdichterentnahme und/oder dem Ausgang des Verdichters zu den thermisch belasteten Bauteilen mindestens einem Regelelement zur Regelung des Kühlluftmassenstroms zu den thermisch belasteten Bauteilen sowie einen Gasturbinenregler. Erfindungsgemäss ist in dem Regler mindestens ein zusätzlicher Satz von Regelparametern gespeichert, den ein Betreiber zur Umsetzung eines speziellen Fahrkonzepts anwählen kann.

Um einen Mindestkühlluftstrom zu den thermisch belasteten Bauteilen zu gewährleistet, weist gemäss einer Ausführung das Regelelement eine Mindestöffnung auf, Das Regelelement kann beispielsweise so konfiguriert sein, dass ein Schliessen in Durchflussrichtung mechanisch nicht möglich ist. Insbesondere verhindert der Mindestkühlluftstrom eine Rückströmung in das Kühlluftsystem. Typischerweise sind gekühlte Turbinenschaufeln aus hochtemperaturfesten Werkstoffen. Die Zuleitungssysteme und beispielsweise Schaufelträger oder Gehäuse, durch die diese Zuleitungen führen, sind typischerweise aus anderen Materialen als die Turbinenschaufeln hergestellt. Diese sind in der Regel nicht hochtemperaturfest, so dass eine Rückströmung von Heissgasen bis in diese Teile zu unterbinden ist, auch wenn die Heissgastemperatur unter eine für die eigentlich zu kühlenden thermisch belasteten Bauteile zulässige Temperatur gefallen ist.

Gemässe einer Ausführung weist das Regelelement zur Regelung des Kühlluftstroms eine Mindestöffnung auf, die eine Durchflusskapazität von mindestens 10% der Durchflusskapazität bei Volllast sicherstellt, um einen Heissgasseinbruch zu unterbinden.

Herkömmlich sind Kühlluftöffnungen von thermisch belasteten Bauteilen für den Vollastbetrieb ausgelegt, da dieser der lebensdauerkritische Betriebszustand ist. Im Gegensatz zu einer herkömmlichen Ausführung umfast die Gasturbinenanlage gemäss einer Ausführung mindestens ein thermisch belastetes Bauteil mit Kühlluftöffnungen deren Durchflusskapazität grösser ist, als für den Auslegungspunkt bei Volllast benötigt wird. Dies erlaubt abhängig vom Betriebsverfahren den Kühlluftstrom in einem weiten Bereich zu regeln.
Gemäss einer Ausführung weisen die Kühlluftöffnungen eines thermisch belasteten Bauteils eine Durchflusskapazität auf, die mindestens 30% grösser ist, als die Durchflusskapazität, die zum Erreichen der Designlebensdauer im Auslegungspunkt bei Volllast benötigt wird.
Gemäss einer weiteren Ausführung weisen die Kühlluftöffnungen eines thermisch belasteten Bauteils eine Durchflusskapazität auf, die mindestens 50% grösser ist, als die Durchflusskapazität, die für einen sicheren Betrieb im Auslegungspunkt bei Volllast benötigt wird.

Die Kühlwirkung der Kühlluft und deren Wirkung auf den Gasturbinenprozess wird nicht nur durch die Kühlluftmassenströme bestimmt, sondern auch durch die Temperatur, auf die diese in Rückkühlern zurückgekühlt wird. In einer Ausführung des Verfahrens wird daher weiter die Rückkühltemperatur abhängig von den Betriebszielen, bzw. von dem Kühlluftmassenstrom geregelt.
In einer speziellen Ausführung wird die Rückkühltemperatur mit steigendem Kühlluftmassenstrom angehoben. Diese Temperaturanhebung kann dabei so gewählt werden, dass der Lebensdauerverbrauch aufgrund der erhöhten Kühlluftströme unbeeinflusst ist.

In einer weiteren Ausführung wird die Rückkühltemperatur mit steigendem Kühlluftmassenstrom reduziert. Eine Reduktion der Rückkühltemperatur bei gleichzeitiger Massenstromreduktion kann bei tiefer Teillast für den Mitteldruckteil ohne Lebensdauereinbusse beispielsweise für die TAT- Regelung realisiert werden.
In einer weiteren Ausführung wird die Rückkühltemperatur bei Teillast reduziert, um beispielsweise bei einer für einen Lastpunkt gegebenen TIT die Heissgastemperatur zu erhöhen.

Die dargestellten Ausführungen der Erfindung mit einer Gasturbine mit einer Brennkammer dienen lediglich zur Erläuterung und sind nicht einschränkend auszulegen. Beispielsweise ist die Erfindung auch für Gasturbinen mit zwei oder mehr Brennkammern und/ oder Turbinen anwendbar, wie sie beispielsweise aus der EP0620363 B1 oder der EP0718470 A2 bekannt sind und im nachfolgenden Ausführungsbeispiel dargestellt ist.

Weiter ist das Verfahren zur Optimierung von besonderen Betriebsarten vorteilhaft. Beispielsweise kann bei dem Betrieb einer Gasturbine mit High Fogging, d.h. Wassereinspritzung in den Verdichter zur Leistungssteigerung, der Druckaufbau in dem Verdichter gegenüber einer Auslegung für einen trockenen Betrieb verschoben sein. Typischerweise verschiebt sich der Druckaufbau durch den Kühlungseffekt des eingespritzten Wassers während des High Fogging Betriebs zum Verdichterende. Dadurch sinken die Drücke in einer Nieder- und Mitteldruck- Kühlluftentnahme relativ zum Verdichterenddruck. Der Druck im Heissgaspfad ist aber proportional zum Verdichterenddruck, so dass die im Nieder- und Mitteldruckkühlluftsystem zu Verfügung stehende Druckdifferenz beim High Fogging Betrieb reduziert wird. Für den High Fogging Betrieb kann die Regelung so angepasst werden, dass die Veränderungen in den auf den Verdichterenddruck bezogenen Drücken bei einer Nieder- und Mitteldruckentnahme durch Regelelemente in den Kühlluftleitungen kompensiert werden.

### KURZE BESCHREIBUNG DER ZEICHNUNGEN

Eine bevorzugte Ausführungsform der Erfindung wird im Folgenden anhand einer Zeichnung beschrieben, die lediglich zur Erläuterung dient und nicht einschränkend auszulegen ist.

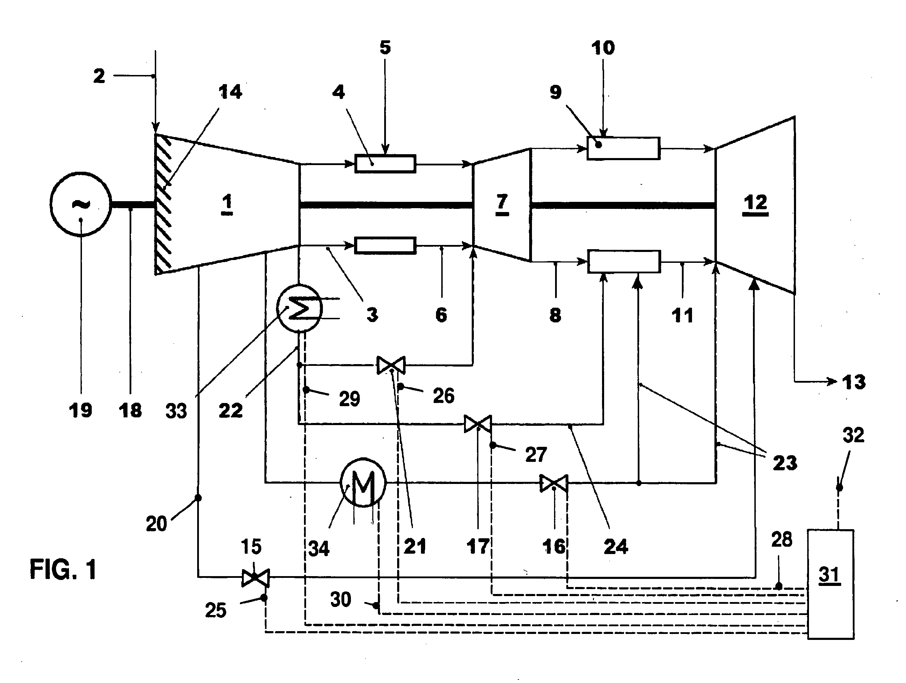

- Fig. 1: zeigt ein stark vereinfachtes Anlagenschema einer Gasturbinenanlage gemäss einem Ausführungsbeispiel der Erfindung.

### WEGE ZUR AUSFÜHRUNG DER ERFINDUNG

Fig. 1 zeigt eine Gasturbine mit sequentieller Verbrennung zur Durchführung des erfindungsgemässen Verfahrens. Sie besteht aus einem Verdichter 1, einer ersten Brennkammer 4, einer ersten Turbine 7, einer zweiten Brennkammer 9 und einer zweiten Turbine 12. Typischerweise umfasst sie einen Generator 19, der am kalten Ende der Gasturbine, dass heisst am Verdichter 1 an eine Welle 18 der Gasturbine angekuppelt ist.

Ein Brennstoff, Gas oder Öl, wird über eine Brennstoffzuführung 5 in die erste Brennkammer 4 eingeleitet, mit im Verdichter 1 verdichteter Luft vermischt und verbrannt. Die Heissgase 6 werden unter Arbeitsabgabe in der nachfolgenden ersten Turbine 7 teilentspannt.

Sobald die zweite Brennkammer in Betrieb ist, wird den teilentspannten Gasen 8 in Brennern der zweiten Brennkammer 9 über eine Brennstoffzuführung 10 weiterer Brennstoff zugemischt und in der zweiten Brennkammer 9 verbrannt. Die Brennkammern 9 sind beispielsweise als Ringbrennkammern. Die Heissgase 11 werden unter Arbeitsabgabe in der nachfolgenden zweiten Turbine 12 entspannt. Die Abgase 13 können nutzbringend einem Abhitzekessel eines Kombikraftwerkes oder einer anderen Abwärmenutzung zugeführt werden.

Zur Regelung des Ansaugmassenstroms verfügt der Verdichter 1 über mindestens eine verstellbare Verdichterleitreihe 14.

Ein Teil der verdichteten Luft 3 wird als Hochdruckkühlluft 22 abgezweigt, über einen Hochdruck- Kühlluftkühler 33 rückgekühlt und der ersten Brennkammer 4 (Kühlluftleitung nicht dargestellt) und der ersten Turbine als Kühlluft 22 zugeführt. Der Massenstrom der Hochdruckkühlluft 22, der der Hochdruckturbine 7 zugeführt wird, kann in dem Beispiel durch ein Hochdruckkühlluft- Regelventil 21 geregelt werden.

Ein Teil der Hochdruckkühlluft 22 wird als sogenannte Trägerluft 24 den Brennerlanzen zugeführt und zur Kühlung der Brennerlanzen und/ oder Unterstützung der Einleitung und Vermischung des Brennstoffes in den Brenner verwendet. Der Massenstrom der Trägerluft 24 ist durch ein Trägerluft- Regelventil 17 regelbar.

Aus dem Verdichter 1 wird ein Teil der Luft teilverdichtet abgezweigt, über einen Niederdruck- Kühlluftkühler 34 rückgekühlt und der zweiten Brennkammer 9 und der zweiten Turbine als Mitteldruck- Kühlluft 23 zugeführt. Der Massenstrom der Mitteldruck-Kühlluft 23 ist in dem Beispiel durch ein Mitteldruck- Kühlluftregelventil 16 regelbar.

Ausserdem wird dem Verdichter 1 ein Teil der Luft teilverdichtet als Niederdruck- Kühlluft 20 abgezweigt und der zweiten Turbine 12 zugeführt. Der Massenstrom der NiederdruckKühlluft 20 ist in dem Beispiel durch ein Niederdruck- Kühlluftregelventil 15 regelbar.

Die Gasturbinenanlage umfasst weiter einen Regler 31, der über herkömmliche Regelverbindungen 32 zur Regelung mit der Gasturbine verbunden ist sowie über Regelverbindungen (25, ... , 30) mit den Regelelementes des Kühlluftsystems verbunden ist. Die herkömmlichen Regelverbindungen, die im Rahmen der Erfindung zur Durchführung des erfindungsgemässen Verfahren erwähnenswert sind, umfassen Messleitungen zur Übertragung wichtiger Prozessgrössen der Gasturbine, insbesondere zur Messung der Turbinenaustrittstemperatur der ersten Turbine 7 und der zweiten Turbine 12, des Verdichteraustrittsdruckes, der Brennkammerdrücke, der Temperatur der Ansaugluft 2 und der Verdichterendluft 3, der Stellung der verstellbaren Verdichterleitschaufeln 14 sowie der Klemmenleistung des Generators 19. Weiter umfassen sie Regelverbindungen zur Regelung von Brennstoffregelventilen zur Regelung der Brennstoffzuführung 5, 10 sowie Regelverbindungen zur Regelung der verstellbaren Verdichterleitschaufeln 14.

Zur Regelung der Kühllufttemperaturen ist der Regler 31 mit dem Kühlluftkühler 33, 34 durch eine Regelverbindung zum Mitteldruckkühlluftkühler 30 und einer Regelverbindung zum Hochdruckdruckkühlluftkühler 29 verbunden. Zur Regelung der Kühlluftströme ist der Regler 31 mit dem Niederdruck- Kühlluftregelventil 15 durch eine Regelverbindung zum Niederdruck- Kühlluftregelventil 25 verbunden, mit dem Mitteldruck- Kühlluftregelventil 16 durch eine Regelverbindung zum Mitteldruck- Kühlluftregelventil 28 verbunden und mit dem Hochdruck- Kühlluftregelventil 21 durch eine Regelverbindung zum Hochdruck-Kühlluftregelventil 26 verbunden. Zur Regelung des Trägerluftstroms 24 ist der Regler 31 weiter mit dem Trägerluft- Regelventil 17 verbunden.

In dem Regler 31 ist neben den Regelparametern für ein Standardbetriebskonzept mindestens ein Satz Regelparameter für ein spezielles, vom Standardkonzept abweichendes, Betriebskonzept abgelegt, die der Betreiber über ein Mensch- Maschine Interface, wie beispielsweise dem Leitstand oder einer "Operator Station", anwählen kann. Dieser Regelparametersatz beinhaltet beispielsweise geänderte Zielwerte für Heissgastemperaturen, Kühlluftströme, Kühlluft- Rückkühltemperaturen, und TAT. Diese Regelparameter können in Form von Tabellen oder als Funktionen abgelegt sein.

### BEZUGSZEICHENLISTE

- 1: Verdichter
- 2: Ansaugluft
- 3: Verdichterendluft
- 4: Erste Brennkammer
- 5: Brennstoffzuführung
- 6: Heissgase
- 7: Erste Turbine
- 8: Teilentspannte Heissgase
- 9: Zweite Brennkammer
- 10: Brennstoffzuführung
- 11: Heissgase
- 12: Zweite Turbine
- 13: Abgase (zum Abhitzekessel)
- 14: Verstellbare Verdichterleitschaufeln
- 15: Niederdruck- Kühlluftregelventil
- 16: Mitteldruck- Kühlluftregelventil
- 17: Trägerluft- Regelventil
- 18: Welle
- 19: Generator
- 20: Niederdruck- Kühlluft
- 21: Hochdruck- Kühlluftregelventil
- 22: Hochdruck- Kühlluft
- 23: Mitteldruck- Kühlluft
- 24: Trägerluft
- 25: Regelverbindung zum Niederdruck- Kühlluftregelventil
- 26: Regelverbindung zum Hochdruck- Kühlluftregelventil
- 27: Regelverbindung zum Trägerluft- Regelventil
- 28: Regelverbindung zum Mitteldruck- Kühlluftregelventil
- 29: Regelverbindung zum Hochdruck- Kühlluftkühler
- 30: Regelverbindung zum Mitteldruck- Kühlluftkühler
- 31: Gasturbinenregler
- 32: Regel- und Messleitungen zur Gasturbine
- 33: Hochdruck- Kühlluftkühler
- 34: Mitteldruck- Kühlluftkühler
- TAT: Turbinenaustrittstemperatur
- TIT: Turbineneintrittstemperatur

## Patentansprüche

1. Verfahren zum Betrieb einer Gasturbinenanlage, umfassend einen Verdichter (1), welcher eingangsseitig Ansaugluft (2) ansaugt und zu ausgangsseitig zur Verfügung stehender Verdichterendluft (3) verdichtet, eine Brennkammer (4, 9), in welcher unter Verwendung der Verdichterendluft (3) ein Brennstoff (5, 10) unter Bildung von Heissgas (6, 11) verbrannt wird, sowie eine Turbine (7, 12), in welcher das Heissgas (6, 11) unter Arbeitsleistung entspannt wird, bei welchem Verfahren verdichtete Luft aus dem Verdichter (1) entnommen wird und als Kühlluftstrom (20, 22, 23, 24) zur Kühlung thermisch belasteter Bauteile in die Brennkammer (4, 9) und/oder die Turbine (7, 12) geleitet wird, wobei zumindest ein Kühlluftstrom (20, 22, 23, 24) zum Erreichen spezifischer Betriebsziele mit einem Regelelement (15, 16, 17, 21) abhängig von dem Betriebsziel geregelt wird, **dadurch gekennzeichnet, dass** ein Mitteldruck- Kühlluftstrom (23) und/oder ein Niederdruck- Kühlluftstrom (20) zur Kühlung thermisch belasteter Bauteile in die Brennkammer (4, 9) und/oder die Turbine (7, 12) in Abhängigkeit von der Turbinenaustrittstemperatur (TAT) geregelt wird.

2. Verfahren nach Anspruch 1, **dadurch gekennzeichnet, dass** eine Heissgastemperatur in der Brennkammer (4, 9) reduziert wird und ein Kühlluftstrom (20, 22, 23, 24) zur Kühlung thermisch belasteter Bauteile in die Brennkammer (4, 9) und/oder die Turbine (7, 12) erhöht wird.

3. Verfahren nach einem der Ansprüche 1 oder 2, **dadurch gekennzeichnet, dass** eine Heissgastemperatur in der Brennkammer (4, 9) reduziert wird und ein Hochdruck- Kühlluftstrom (22) erhöht und ein Mitteldruck- Kühlluftstrom (23) und/ oder ein Niederdruck- Kühlluftstrom (20) reduziert wird.

4. Verfahren nach Anspruch einem der Ansprüche 1 bis 3, **dadurch gekennzeichnet, dass** für Teillastbetrieb unter 40% relativer Last die Mischtemperatur (TIT) reduziert wird und mindestens ein Kühlluftstrom (20, 22, 23, 24) zur Kühlung thermisch belasteter Bauteile der Brennkammer (4, 9) und/oder der Turbine (7, 12) erhöht wird.

5. Verfahren nach Anspruch einem der Ansprüche 1 bis 4, **dadurch gekennzeichnet, dass** für Teillastbetrieb die Mischtemperatur (TIT) reduziert wird, ein Hochdruck-Kühlluftstrom (22) zur Kühlung thermisch belasteter Bauteile in die Brennkammer (4, 9) und/oder die Turbine (7, 12) erhöht wird und ein Mitteldruck- Kühlluftstrom (23) und/ oder ein Niederdruck- Kühlluftstrom (20) zur Kühlung thermisch belasteter Bauteile reduziert wird.

6. Verfahren nach einem der Ansprüche 1 bis 5, **dadurch gekennzeichnet, dass** ein Kühlluftstrom (20, 22, 23, 24) zur Kühlung thermisch belasteter Bauteile der Brennkammer (4, 9) und/oder der Turbine (7, 12) als Funktion des Verdichteraustrittsdrucks geregelt wird.

7. Verfahren nach Anspruch B, **dadurch gekennzeichnet, dass** bei einer Umgebungstemperatur unter 7°C ein Kühlluftstrom (20, 22, 23, 24) zur Kühlung thermisch belasteter Bauteile der Brennkammer (4, 9) und/oder der Turbine (7, 12) erhöht wird, um den Verdichteraustrittdruck zu reduzieren.

8. Verfahren nach Anspruch 1, **dadurch gekennzeichnet, dass** bei Teillastbetrieb unter 40% relative Last ein Mitteldruck- Kühlluftstrom (23) und/oder ein Niederdruck- Kühlluftstrom (20) zur Kühlung thermisch belasteter Bauteile der Brennkammer (4, 9) und/oder der Turbine (7, 12) in Abhängigkeit von der Turbinenaustrittstemperatur (TAT) reduziert wird, um die Turbinenaustrittstemperatur (TAT) konstant zu halten.

9. Verfahren nach Anspruch 1 oder 8, **dadurch gekennzeichnet, dass** unabhängig von der Turbinenaustrittstemperatur (TAT) der Mitteldruck- Kühlluftstrom (23) und/oder der Niederdruck- Kühlluftstrom (20) nicht unter einen Mindeststrom zur Spülung und zur Vermeidung einer Rückströmung reduziert wird.

10. Verfahren nach einem der vorangehenden Ansprüche, **dadurch gekennzeichnet, dass** abhängig von einem Kühlluftstrom (22, 23, 24) die Rückkühltemperatur eines Rückkühlers (33, 34), in dem der Kühlluftstrom (22, 23, 24) rückgekühlt wird, geregelt wird.

11. Gasturbinenanlage umfassend einen Verdichter (1), welcher eingangeseltig Ansaugluft (2) ansaugt und zu ausgangsseitig zurverfügung stehender Verdichterendluft (3) verdichtet, eine Brennkammer (4, 9), in welcher unter Verwendung der Verdichterendluft (3) ein Brennstoff (5, 10) unter Bildung von Heissgas (6, 11) verbrannt wird, eine Turbine (7, 12), in welcher das Heissgas (6, 11) unter Arbeitsleistung entspannt wird, wobei zur Kühlung von thermisch belasteten Bauteilen der Brennkammer (4, 9) und/oder der Turbine (7, 12) ein Kühlluftstrom (20, 22, 23, 24) von dem Verdichter (1) und/oder dem Ausgang des Verdichters (1) zu den thermisch belasteten Bauteilen geleitet wird sowie ein Gasturbinenregler (31), **dadurch gekennzeichnet, dass** die Gasturbinenanlage mindestens ein Regelelement (16, 17) zur Regelung des Mitteldruckkühlluftstroms (23, 24) in Abhängigkeit von der Turbinenaustrittstemperatur und/oder mindestens ein Regelelement (15) zur Regelung des Niederdruckkühlluftstroms (20) in Abhängigkeit von der Turbinenaustrittstemperatur umfasst.

12. Gasturbinenanlage nach Anspruch 11, **dadurch gekennzeichnet, dass** mindestens ein Regelelement (16, 16, 17) eine Mindestöffnung aufweist, die eine Durchflusskapazität von mindestens 10% der Durchflusskapazität bei Volllast sicherstellt.

13. Gasturbinenanlage (10) nach Anspruch 11 oder 12, **dadurch gekennzeichnet, dass** mindestens ein thermisch belastetes Bauteil Kühlluftöffnungen umfast, die eine Durchflusskapazität aufweisen, die mindestens 30% grösser ist, als die Durthflusskapazität, die zum Erreichen der Designlebensdauer Im Auslegungspunkt bei Volllast benötigt wird.

## Claims

1. Method for operating a gas turbine plant, comprising a compressor (1), which on the inlet side inducts intake air (2) and compresses it for providing compressor exit air (3) on the discharge side, a combustion chamber (4, 9), in which a fuel (5, 10) is combusted, using the compressor exit air (3), forming a hot gas (6, 11), and also a turbine (7, 12), in which the hot gas (6, 11) is expanded, performing work, in which method compressed air is extracted from the compressor (1) and is directed as cooling air flow (20, 22, 23, 24) into the combustion chamber (4, 9) and/or into the turbine (7, 12) for cooling thermally loaded components, wherein at least one cooling air flow (20, 22, 23, 24), for achieving specific operating targets, is controlled with a control element (15, 16, 17, 21) in dependence upon the operating target, **characterized in that** an intermediate-pressure cooling air flow (23) and/or a low-pressure cooling air flow (20) for cooling thermally loaded components in the combustion chamber (4, 9) and/or in the turbine (7, 12) is controlled as a function of the turbine exhaust temperature (TAT).

2. Method according to Claim 1, **characterized in that** a hot gas temperature in the combustion chamber (4, 9) is reduced and a cooling air flow (20, 22, 23, 24) for cooling thermally loaded components in the combustion chamber (4, 9) and/or in the turbine (7, 12) is increased.

3. Method according to either of Claims 1 or 2, **characterized in that** a hot gas temperature in the combustion chamber (4, 9) is reduced and a high-pressure cooling air flow (22) is increased and an intermediate-pressure cooling air flow (23) and/or a low-pressure cooling air flow (20) is reduced.

4. Method according to one of Claims 1 to 3, **characterized in that** for partial load operation below 40% relative load the mixing temperature (TIT) is reduced and at least one cooling air flow (20, 22, 23, 24) for cooling thermally loaded components of the combustion chamber (4, 9) and/or of the turbine (7, 12) is increased.

5. Method according to one of Claims 1 to 4, **characterized in that** for partial load operation the mixing temperature (TIT) is reduced, a high-pressure cooling air flow (22) for cooling thermally loaded components in the combustion chamber (4, 9) and/or in the turbine (7, 12) is increased, and an intermediate-pressure cooling air flow (23) and/or a low-pressure cooling air flow (20) for cooling thermally loaded components is reduced.

6. Method according to one of Claims 1 to 5, **characterized in that** a cooling air flow (20, 22, 23, 24) for cooling thermally loaded components of the combustion chamber (4, 9) and/or of the turbine (7, 12) is controlled as a function of the compressor exit pressure.

7. Method according to Claim 6, **characterized in that** at an ambient temperature below 7°C a cooling air flow (20, 22, 23, 24) for cooling thermally loaded components of the combustion chamber (4, 9) and/or of the turbine (7, 12) is increased in order to reduce the compressor exit pressure.

8. Method according to Claim 1, **characterized in that** in partial load operation below 40% relative load an intermediate-pressure cooling air flow (23) and/or a low-pressure cooling air flow (20) for cooling thermally loaded components of the combustion chamber (4, 9) and/or of the turbine (7, 12) is reduced as a function of the turbine exhaust temperature (TAT) in order to keep the turbine exhaust temperature (TAT) constant.

9. Method according to Claim 1 or 8, **characterized in that** regardless of the turbine exhaust temperature (TAT) the intermediate-pressure cooling air flow (23) and/or the low-pressure cooling air flow (20) is not reduced below a minimum flow for purging and for avoiding a backflow.

10. Method according to one of the preceding claims, **characterized in that** the recooling temperature of a recooler (33, 34), in which the cooling air flow (22, 23, 24) is recooled, is controlled in dependence upon a cooling air flow (22, 23, 24).

11. Gas turbine plant comprising a compressor (1), which on the inlet side inducts intake air (2) and compresses it for providing compressor exit air (3) on the discharge side, a combustion chamber (4, 9), in which a fuel (5, 10) is combusted, using the compressor exit air (3), forming hot gas (6, 11), a turbine (7, 12), in which the hot gas (6, 11) is expanded, performing work, wherein for cooling thermally loaded components of the combustion chamber (4, 9) and/or of the turbine (7, 12) a cooling air flow (20, 22, 23, 24) is directed from the compressor (1) and/or from the exit of the compressor (1) to the thermally loaded components, and also a gas turbine controller (31), **characterized in that** the gas turbine plant comprises at least one control element (16, 17) for controlling the intermediate-pressure cooling air flow (23, 24) as a function of the turbine exhaust temperature and/or at least one control element (15) for controlling the low-pressure cooling air flow (20) as a function of the turbine exhaust temperature.

12. Gas turbine plant according to Claim 11, **characterized in that** at least one control element (15, 16, 17) has a minimum opening which ensures a throughflow capacity of at least 10% of the throughflow capacity at full load.

13. Gas turbine plant (10) according to Claim 11 or 12, **characterized in that** at least one thermally loaded component comprises cooling air openings which have a throughflow capacity which is at least 30% greater than the throughflow capacity which is required for achieving the design service life at the design point at full load.

## Revendications

1. Procédé d'exploitation d'une installation à turbine à gaz, comprenant un compresseur (1) qui, du côté de l'entrée, aspire de l'air d'aspiration (2) et le comprime en air final de compresseur (3) mis à disposition du côté de la sortie, une chambre de combustion (4, 9) dans laquelle est consumé un combustible (5, 10) en formant du gaz chaud (6, 11) en utilisant l'air final de compresseur (3), ainsi qu'une turbine (7, 12) dans laquelle le gaz chaud (6, 11) est détendu sous rendement effectif, procédé avec lequel de l'air comprimé est prélevé du compresseur (1) et acheminé sous forme de courant d'air de refroidissement (20, 22, 23, 24) pour le refroidissement des composants soumis à une contrainte thermique dans la chambre de combustion (4, 9) et/ou la turbine (7, 12), au moins un courant d'air de refroidissement (20, 22, 23, 24) étant régulé en vue d'atteindre des objectifs opérationnels spécifiques avec un élément de régulation (15, 16, 17, 21) en fonction de l'objectif opérationnel, **caractérisé en ce qu'**un courant d'air de refroidissement à moyenne pression (23) et/ou un courant d'air de refroidissement à basse pression (20) pour le refroidissement des composants soumis à une contrainte thermique dans la chambre de combustion (4, 9) et/ou la turbine (7, 12) est régulé en fonction de la température de sortie de la turbine (TAT).

2. Procédé selon la revendication 1, **caractérisé en ce qu'**une température des gaz chauds dans la chambre de combustion (4, 9) est réduite et un courant d'air de refroidissement (20, 22, 23, 24) pour le refroidissement des composants soumis à une contrainte thermique dans la chambre de combustion (4, 9) et/ou la turbine (7, 12) est augmenté.

3. Procédé selon l'une des revendications 1 ou 2, **caractérisé en ce qu'**une température des gaz chauds dans la chambre de combustion (4, 9) est réduite et un courant d'air de refroidissement à haute pression (22) est augmenté et un courant d'air de refroidissement à moyenne pression (23) et/ou un courant d'air de refroidissement à basse pression (20) est réduit.

4. Procédé selon l'une des revendications 1 à 3, **caractérisé en ce que** pour un fonctionnement en charge partielle à moins de 40 % de charge relative, la température de mélange (TIT) est réduite et au moins un courant d'air de refroidissement (20, 22, 23, 24) pour le refroidissement des composants soumis à une contrainte thermique de la chambre de combustion (4, 9) et/ou la turbine (7, 12) est augmenté.

5. Procédé selon l'une des revendications 1 à 4, **caractérisé en ce que** pour un fonctionnement en charge partielle, la température de mélange (TIT) est réduite, un courant d'air de refroidissement à haute pression (22) pour le refroidissement des composants soumis à une contrainte thermique dans la chambre de combustion (4, 9) et/ou la turbine (7, 12) est augmenté et un courant d'air de refroidissement à moyenne pression (23) et/ou un courant d'air de refroidissement à basse pression (20) pour le refroidissement des composants soumis à une contrainte thermique est réduit.

6. Procédé selon l'une des revendications 1 à 5, **caractérisé en ce qu'**un courant d'air de refroidissement (20, 22, 23, 24) pour le refroidissement des composants soumis à une contrainte thermique de la chambre de combustion (4, 9) et/ou la turbine (7, 12) est régulé en fonction de la pression de sortie du compresseur.

7. Procédé selon la revendication 6, **caractérisé en ce qu'**en présence d'une température ambiante inférieure à 7 °C, un courant d'air de refroidissement (20, 22, 23, 24) pour le refroidissement des composants soumis à une contrainte thermique de la chambre de combustion (4, 9) et/ou la turbine (7, 12) est augmenté pour réduire la pression de sortie du compresseur.

8. Procédé selon la revendication 1, **caractérisé en ce que** lors d'un fonctionnement en charge partielle à moins de 40 % de charge relative, un courant d'air de refroidissement à moyenne pression (23) et/ou un courant d'air de refroidissement à basse pression (20) pour le refroidissement des composants soumis à une contrainte thermique de la chambre de combustion (4, 9) et/ou la turbine (7, 12) est réduit en fonction de la température de sortie de la turbine (TAT) pour maintenir la température de sortie de la turbine (TAT) constante.

9. Procédé selon la revendication 1 ou 8, **caractérisé en ce qu'**indépendamment de la température de sortie de la turbine (TAT), le courant d'air de refroidissement à moyenne pression (23) et/ou le courant d'air de refroidissement à basse pression (20) n'est pas réduit au-dessous d'un courant minimum pour le rinçage et pour éviter un reflux.

10. Procédé selon l'une des revendications précédentes, **caractérisé en ce que** la température de refroidissement de retour d'un refroidisseur de retour (33, 34), dans lequel est refroidi le retour du courant d'air de refroidissement (22, 23, 24), est régulée en fonction d'un courant d'air de refroidissement (22, 23, 24).

11. Installation à turbine à gaz comprenant un compresseur (1) qui, du côté de l'entrée, aspire de l'air d'aspiration (2) et le comprime en air final de compresseur (3) mis à disposition du côté de la sortie, une chambre de combustion (4, 9) dans laquelle est consumé un combustible (5, 10) en formant du gaz chaud (6, 11) en utilisant l'air final de compresseur (3), une turbine (7, 12) dans laquelle le gaz chaud (6, 11) est détendu sous rendement effectif, un courant d'air de refroidissement (20, 22, 23, 24) étant acheminé du compresseur (1) et/ou de la sortie du compresseur (1) vers les composants soumis à une contrainte thermique pour le refroidissement des composants soumis à une contrainte thermique de la chambre de combustion (4, 9) et/ou la turbine (7, 12), ainsi qu'un régulateur de turbine à gaz (31), **caractérisée en ce que** l'installation à turbine à gaz comprend au moins un élément de régulation (16, 17) pour la régulation du courant d'air de refroidissement à moyenne pression (23, 24) en fonction de la température de sortie de la turbine et/ou au moins un élément de régulation (15) pour la régulation du courant d'air de refroidissement à basse pression (20) en fonction de la température de sortie de la turbine.

12. Installation à turbine à gaz selon la revendication 11, **caractérisée en ce qu'**au moins un élément de régulation (15, 16, 17) présente une ouverture minimale qui garantit une capacité de débit égale à au moins 10 % de la capacité de débit à pleine charge.

13. Installation à turbine à gaz (10) selon la revendication 11 ou 12, **caractérisée en ce qu'**au moins un composant soumis à une contrainte thermique comprend des ouvertures de refroidissement, lesquelles présentent une capacité de débit qui est au moins 30 % supérieure à la capacité de débit qui est nécessaire pour atteindre la durée de vie théorique au point nominal à pleine charge.
